# EUROPEAN PATENT APPLICATION

(11) **EP 1 172 168 A1**
(43) Date of publication of application: **16.01.2002**
(21) Application number: 00202473.5
(22) Date of filing: 12.07.2000
(51) Int. Cl.: B23D 61/02

(54) **Circular saw blade with a thickened radial zone to prevent saw dust from entering the space between saw blade body and workpiece**

(71) Applicant: Veisto-Rakenne Rautio Oy, 52700 Mäntyharju (FI)
(72) Inventor: Rautio, Kauko, 52700 Mäntyharju (FI)
(74) Representative: Heinänen, Pekka Antero

(57) **Abstract**

A circular saw blade is disclosed comprising most advantageously a disc-like blade body (1) having teeth made thereon, the teeth (2) having cutting edges and/or inserts (3) adapted thereon. On the blade body (1) are adapted means for essentially preventing sawing debris such as sawdust from entering the gap between the sides of said blade body and the piece being sawn.

## Description

The invention relates to a circular saw blade most advantageously comprising a disc-like blade body having teeth made thereon, said teeth having cutting edges and/or cutting inserts adapted thereon.

Prior-art circular saw blades that are particularly adapted for sawing wood materials have been found to suffer from the access of sawing debris, such as sawdust, into the gap remaining between the blade body and the piece being sawn. This situation causes a number of problems. Among these, the blade typically develops heat build-up due to the friction imposed by the sawdust on the blade surface. Resultingly, the pretensioning stress of the blade is reduced from its initial value and the stability of the blade during sawing is compromised. The outcome is an inferior dimensional accuracy in sawing and a deteriorated quality of sawn goods. Ultimately, the blade may be damaged due to excessive heating. Furthermore, the sawdust jammed between the blade and the sawn piece will adhere to the sawed surface of the piece and thus may leave the point of the sawing operation, whereby it can give rise to an additional cleaning work. Sawdust thus adhering to sawn goods can cause disturbance in, e.g., machine vision applications, which is reflected in problems hampering the operation of automated equipment such as sorting devices. From patent publication FI-B 98,608 is known a circular saw blade comprising a disc-like blade body having its outer periphery provided with teeth, said teeth having cutting edges or tip inserts adapted thereon, and in which blade the thickness of the body tapers radially outward toward the periphery of the blade. In this kind of circular saw blade, jamming of sawdust between the blade body and sawn goods is even more accentuated.

It is an object of the invention to provide a saw blade free from the problems hampering the use of the prior-art technique discussed above.

The goal of the invention is achieved by means of preventing the access of sawdust between the sides of the blade body and the piece being sawn.

The invention is characterized by what is stated in the appended claims.

More specifically, the invention is characterized in that the blade body is provided with means for essentially preventing sawing debris such as sawdust from entering the gap between the sides of blade body and the piece being sawn.

According to a preferred embodiment of the invention, the means for preventing the entry of sawdust into the gap between the saw blade body and the piece being sawn comprise a thicker radial zone, most advantageously of an annular kind, made to the blade body. This means provides a substantial improvement over prior-art techniques via relatively simple arrangements in the blade manufacture.

According to another preferred embodiment according to the invention, the peripheral zone of the blade body is made annularly thicker in the radial direction at least down to the bottom of the gullets. As the entire blade periphery hence has a greater lateral width, also the seat of tooth inserts is wider

Advantageously, the entire peripheral zone of the blade body is laterally wider than the blade body middle portion that extends radially inward therefrom toward the center of the blade.

According to a still another preferred embodiment according to the invention, the thicker peripheral zone of the blade body is extended radially inward from the gullet bottoms toward the blade center by a certain radial guard distance. This arrangement serves to assure that no gap can remain between the gullets and the thicker peripheral zone via which sawdust could escape radially inward into the gap between the blade body and the piece being sawn.

The saw blade according to the invention has a number of benefits. By way of extending the thicker peripheral zone at least down to the bottom of the cutting tooth, a substantial hindrance to the access of sawdust into the gap between the blade body and the piece being sawn is established. As a result, the blade can rotate with less friction, thereby avoiding the risk of excessive heating of the blade. Consequently, the blade retains its pretensioning stresses better than blades of a prior-art construction and, hence, the stability of the blade remains unchanged. This is ultimately reflected in good dimensional stability of sawing. Moreover, the risk of blade damage due to excessive heating is reduced essentially.

The invention is next examined with the help of an exemplifying embodiment by making reference to the appended drawings, in which
FIG. 1 shows a side view of an embodiment of a circular saw blade according to the invention; and
FIG. 2 shows different kinds of saw blades mounted on a common shaft and sectioned along the line II-II of FIG. 1;

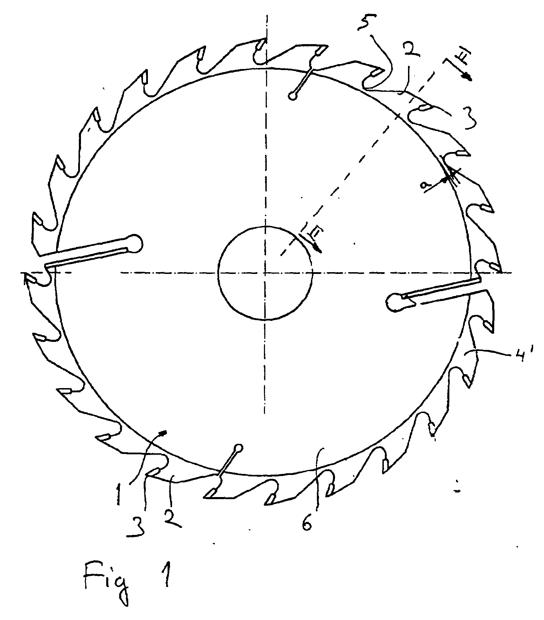

Referring to FIG. 1, therein is shown an embodiment of a circular saw blade according to the invention in a side view. The blade comprises a disc-like blade body 1 having teeth 2 made on its periphery. The teeth have cutting edges and/or cutting inserts 3 adapted thereon. Between each pair of adjacent teeth 2, there is made a slot, later in the text called a gullet, that extends radially inward toward the center axis of the blade. The point of the gullet radially closest to the blade center is later in the text called the gullet bottom 5. The blade body 1 is provided with means for essentially preventing sawing debris such as sawdust from gaining access to the gap between the side surface of the blade body and the piece being sawn.

The means provided for preventing sawdust from gaining access to the gap between the side surface of the blade body and the piece being sawn comprises a thicker radial zone 4, most advantageously of an annular kind, made to the blade body 1, the shoulder serving to prevent the entry of sawdust from the gullet into the gap between the saw blade body and the piece being sawn during sawing. The thicker radial zone 4 is adapted at least substantially in a close proximity to the gullet bottoms 5 and, further, so as to advantageously extend radially inward toward the blade center by a certain radial guard distance from the gullet bottoms 5.

According to another embodiment, the peripheral annular zone 4' of the blade body is made thicker in the lateral direction than the rest of the blade body and is extended radially inward at least down to the gullet bottoms 5. Advantageously, the peripheral annular zone 4' is made over its entire radial width thicker than the periphery of blade body zone 6 remaining radially more inwardly toward the blade center from said annular zone.

The thicker peripheral annular zone 4, 4' extends by a radial guard distance a from the gullet bottoms 5 toward the center of the blade body. Depending on the application, the guard distance a may be varied, a typical value being in the range of 0.5 - 5.0 mm.

In the lateral direction of the blade body, the thicker peripheral annular zone 4, 4' is generally advantageously extended to both sides of the blade body 1. Typically, the lateral thickness of the annular zone is narrower than the width of the cutting insert or blade tooth cutting edge. Then, the thicker annular zone can serve as a seat for a tooth insert in the fashion described in patent publication Fl 98,608.

In a typical embodiment, the width of the cutting insert is 4 mm. Respectively, the thickness of the annular zone in a direction orthogonal to the plane of the blade body is typically in the range of 2.5 - 3.8 mm. The thickness of the blade body close to the blade center hole is 4.8 mm. If the blade is manufactured into a so-called tapered blade in which the thickness of the blade body tapers over its middle part toward its periphery, the blade body may have a thickness of 3.8 mm at the diameter where the tapering starts and a thickness of 1.8 mm where the tapering ends. These dimensions are mentioned by way of example and, therefore, must be understood nonlimiting to the spirit of the invention.

The embodiment according to the invention is suited for use in different kinds of saw blades. Particularly advantageously the embodiment according to the invention is used in so-called tapered saw blades in which the thickness of the main body of the blade is radially tapered toward the periphery of the blade. This type of circular saw blade has usually suffered more than conventional blades from jamming of sawdust between the blade body and the piece being sawn.

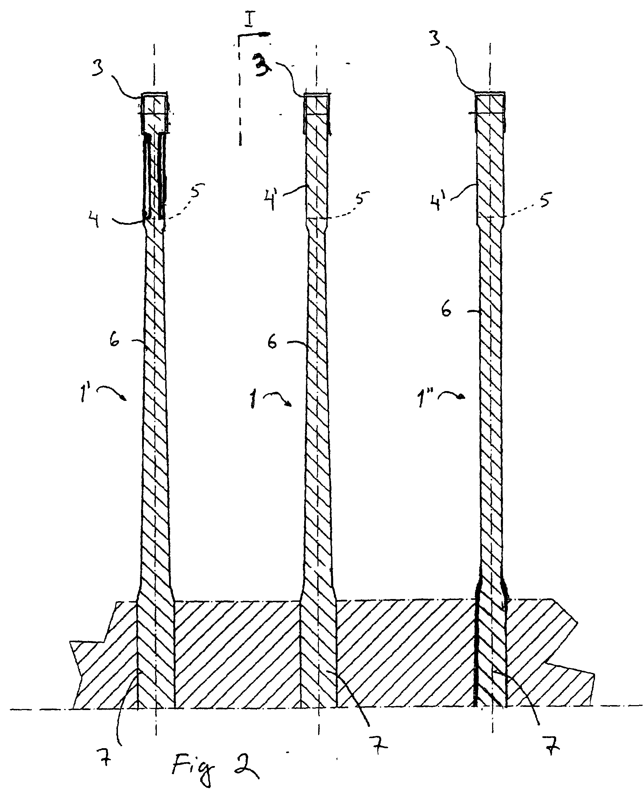

In FIG. 2 is shown a circular saw assembly in which three circular saw blades are mounted on a common shaft between blade clamping washers. The diagram illustrates only the upper half of the assembly in sectional view. As the blades are symmetrical, the lower half obviously is identical. The blade of FIG. 2 is a conventional circular saw blade 1" with a body of rectangular cross section that is provided with thicker radial zone 4' extending in an annular fashion from the entire outer periphery of blade radially inward toward the center of the blade body as centrally as by a given distance past the gullet bottoms 5. The middle part 6 of the body has a thickness smaller than that of the annular zone at the blade periphery. The clamping area 7 of the blade is typically thicker than the middle part of the blade, advantageously as thick as the annular zone at the blade periphery. Centrally in the diagram is shown a special embodiment in which the blade is a so-called tapered blade 1. To the left, there is shown a special embodiment in which the thicker annular zone 4 according to the invention is made on the so-called tapering blade 1', but now only on a radially limited area in the close proximity of the gullet bottoms 5.

To a person skilled in the art it is obvious that the invention is not limited by the above-described exemplifying embodiment, but rather may be varied within the inventive spirit and scope of the appended claims.

## Claims

1. Circular saw blade comprising a blade body (1), most advantageously shaped as a disc, having teeth made thereon, said teeth (2) having cutting edges and/or inserts (3) adapted thereon, and said blade body (1) further having means adapted thereon for the purpose of essentially preventing sawing debris such as sawdust from entering the gap between the sides of said blade body and the piece being sawn, whereby said means for preventing sawdust from entering the gap between the sides of said blade body and the piece being sawn comprise a thicker radial zone (4, 4'), most advantageously of an annular kind, made to the blade body (1), **characterized in that** said thicker radial zone (4, 4') is adapted at least substantially in a close proximity to the gullet bottoms (5) and, further, so as to advantageously extend radially inward toward the blade center by a certain guard distance from the gullet bottoms (5).

2. Saw blade according to claim 1, **characterized in that** to the blade body (1) is adapted a thicker radial zone (4), most advantageously in an annular fashion, that extends in the radial direction from the outer periphery of the blade inward toward the blade center at least down to the gullet bottoms (5).

3. Saw blade according to claim 1 or 2, **characterized in that** the peripheral zone (4') of the blade body is made thicker in the radial direction at least down to the gullet bottoms (5).

4. Saw blade according to claim 3, **characterized in that** the peripheral zone (4') of the blade body is made over its entire radial width thicker than the blade body middle portion (6) extending radially inward therefrom toward the center of the blade.

5. Saw blade according to any one of claims 1-4, **characterized in that** said thicker annular zone (4, 4') of the blade body is extended radially inward from the gullet bottoms (5) toward the blade center by a certain radial guard distance (a).

6. Saw blade according to any one of claims 1-5, **characterized in that** said thicker annular zone (4, 4') of the blade body is provided symmetrically about both sides of the blade body (1).

7. Saw blade according to any one of claims 1-6, **characterized in that** said thicker annular zone (4, 4') of the blade body is thinner in a direction orthogonal to the plane of the blade body than the width of the cutting insert (3) or edge of the blade.

8. Saw blade according to any one of claims 1-7, **characterized in that** said means also act as a seat for attaching said cutting tooth inserts (3).
